# EUROPEAN PATENT SPECIFICATION

(11) **EP 3 156 385 B1**
(45) Date of publication and mention of the grant of the patent: **15.12.2021**
(21) Application number: 15835642.8
(22) Date of filing: 28.08.2015
(51) Int. Cl.: C04B 37/00, C04B 35/565, C04B 41/50, C04B 41/51, C04B 41/52

(54) **CERAMIC BONDED BODY AND HEAT EXCHANGER PROVIDED WITH SAME**
KERAMISCH VERBUNDENER KÖRPER UND WÄRMETAUSCHER DAMIT
CORPS COLLÉ DE CÉRAMIQUES ET ÉCHANGEUR DE CHALEUR COMPORTANT CELUI-CI

(30) Priority: 28.08.2014 JP 2014174099
(43) Date of publication of application: 19.04.2017
(73) Proprietor: KYOCERA Corporation, Kyoto 612-8501 (JP)
(72) Inventor: NAKAMURA,Kiyotaka, Kyoto-shi Kyoto 612-8501 (JP); HIRANO,Yoshinori, Kyoto-shi Kyoto 612-8501 (JP); ONISHI,Chigusa, Kyoto-shi Kyoto 612-8501 (JP); MORIYAMA,Masayuki, Kyoto-shi Kyoto 612-8501 (JP)
(74) Representative: Viering, Jentschura & Partner mbB Patent- und Rechtsanwälte
(86) International application number: PCT/JP2015/074462
(87) International publication number: WO 2016/031973

(56) References cited:
- EP-A1- 2 963 002
- JP-A- H0 333 071
- JP-A- H04 175 270
- JP-A- H09 249 462
- JP-A- S59 190 277
- JP-A- S61 117 172
- JP-A- 2007 246 319
- JP-A- 2013 091 603
- JP-U- H0 282 738
- None

## Description

### Technical Field

The present invention relates to a ceramic joint body formed by bonding silicon carbide ceramics to each other and a heat exchanger provided with the same.

### Background Art

Silicon carbide ceramics have high mechanical strength and excellent characteristics in the thermal resistance, the corrosion resistance, and the like. Thus, silicon carbide ceramics are used in a wide variety of fields. Then, in recent years, along with increasing size in apparatus or equipment provided with a member requiring such characteristics, it is necessary to increase the size and length of the member, and also to increase complexity in the shape of the member. However, it is difficult to integrally form a powder compact having large size, large length, complex shape, or the like.

Further, even if an integrated powder compact could be obtained, it is difficult to obtain a sintered body free of defects by firing the powder compact having large size, large length, complex shape, or the like. Further, in order to provide large size, large length, complex shape, or the like, large equipment for molding and firing and equipment capable of complicated processing should be prepared. Thus, not only fabrication is difficult but also the equipment investment cost is high. Thus, increase in size and length of the member and increase in complexity in shape, or the like are attained by joining a plurality of sintered bodies.

As such a joint body, for example, Patent Literature 1 discloses a silicon carbide ceramic joint body comprising at least two silicon carbide ceramic members joined by using silicon, wherein a corner portion of at least one plane serving as a joint part of the silicon carbide ceramic member is subjected to chamfering. JP 2013091603 A discloses a silicon carbide joined body, JP S59 190277 A discloses a ceramic pipe bonded body and bonding method, and JP S61 117172 A discloses a ceramic bonding structure.

### Citation List

### Patent Literature

Patent Literature 1: Japanese Unexamined Patent Application Publication No. 2001-261459A

### Summary of Invention

### Technical Problem

In recent situations, the ceramic joint body has been used in a portion exposed to a corrosive gas environment and a corrosive liquid environment. Thus, such environments require excellent corrosion resistance and durability so that the joint strength of the joint portion is hardly decreased and it can be used for a long period of time.

The present invention has been devised to satisfy the above-mentioned requirements, and an object thereof is to provide a ceramic joint body having excellent durability and corrosion resistance and a heat exchanger provided with the ceramic joint body.

### Solution to Problem

The invention provides ceramic joint body according to claim 1 and a heat exchanger according to claim 6.

Preferred embodiments are disclosed in the dependent claims.

### Advantageous Effects of Invention

The ceramic joint body of the present invention has excellent durability and corrosion resistance when used in a corrosive gas environment and a corrosive liquid environment.

The heat exchanger of the present invention has excellent durability, thereby having high reliability capable of withstanding long term usage.

### Brief Description of Drawings

FIG. 1 illustrates an example of a ceramic joint body of the present embodiment, wherein FIG. 1A is a perspective view and FIG.1B is a longitudinal sectional view of a joint portion.
FIG. 2 illustrates another example of a ceramic joint body of the present embodiment, wherein FIG. 2A is a perspective view and FIG. 2B is a longitudinal sectional view of a joint portion.
FIG. 3 illustrates yet another example of a ceramic joint body of the present embodiment, wherein FIG. 3A is a perspective view, FIG. 3B is a longitudinal sectional view of the joint portion, and FIG. 3C is a cross-sectional view of a joint layer.
FIG. 4 illustrates yet another example of a ceramic joint body of the present embodiment, wherein FIG. 4A is a perspective view, FIG. 4B is a longitudinal sectional view of a joint portion, and FIG. 4C is cross-sectional view of a joint layer.
FIG. 5 is a schematic drawing of a concentrating photovoltaic power generator illustrating an example of application of a heat exchanger comprising a flow passage body made from the ceramic joint body of the present embodiment.

### Description of Embodiments

Hereinafter, examples of a ceramic joint body of the present embodiment will be described.

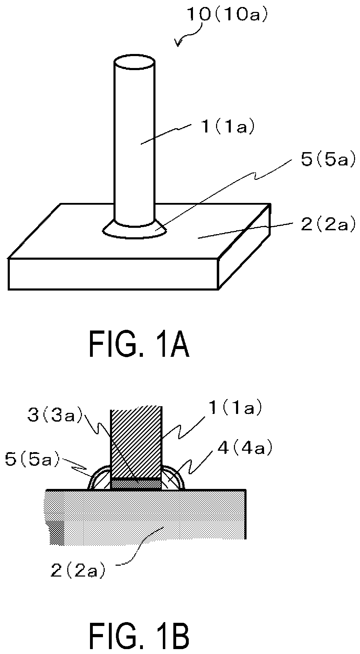

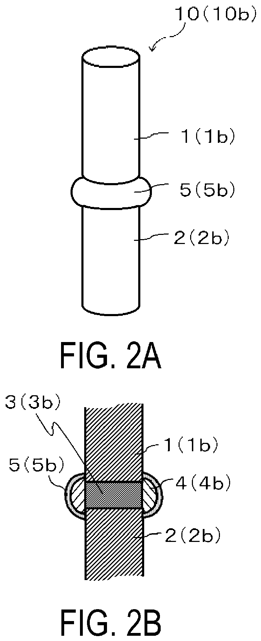

FIGS. 1A to 2B illustrate an example of a ceramic joint body of the present embodiment, wherein FIGS. 1A and 2A are perspective views and FIGS. 1B and 2B are longitudinal sectional views of a joint portion. Here, in each figure, symbols consisting of a numeric digit and an alphabet are imparted for identification. However, the following description is explained with numeric digits alone, except in the description of the ceramic joint body illustrated in FIGS. 1A and 1B or FIGS. 2A and 2B.

In the ceramic joint body 10 of each example illustrated in FIGS. 1A to 2B, a joint layer 3 is provided between the first silicon carbide ceramic 1 and the second silicon carbide ceramic 2, i.e. the first silicon carbide ceramic 1 and the second silicon carbide ceramic 2 are joined by the joint layer 3. FIGS. 1A and 1B illustrate an example that the shape of the first silicon carbide ceramic 1a is cylindrical and the shape of the second silicon carbide ceramic 2a is of flat plate shape. FIGS. 2A and 2B illustrate an example that the shapes of the first silicon carbide ceramic 1b and the second silicon carbide ceramic 2b are both cylindrical. Here, in the ceramic joint body 10 of the present embodiment, the shapes of the first silicon carbide ceramic 1 and the second silicon carbide ceramic 2 are not limited to a cylindrical shape or a flat plate shape.

Then, in the ceramic joint body 10 of the present embodiment, the first coating layer 4 contains metallic silicon as a primary component and is provided on an area extending from the surface of the joint layer 3 to at least one of the surfaces of the first silicon carbide ceramic 1 and the second silicon carbide ceramic 2. Here, FIGS. 1A to 2B illustrate an example that the first coating layer 4 is provided on an area extending from the surface of the joint layer 3 to the surface of both first silicon carbide ceramic 1 and second silicon carbide ceramic 2.

Further, in the ceramic joint body 10 of the present embodiment, the second coating layer 5 contains any one of Ni, Cu, Al or Cr as primary component and is provided on the surface of the first coating layer 4.

With such a configuration satisfied, in the ceramic joint body 10 of the present embodiment, the first silicon carbide ceramic 1 and the second silicon carbide ceramic 2 are firmly joined together; thereby having high joint strength. Here, the high joint strength is obtained because the metallic silicon serving as the primary component of the first coating layer 4 has a satisfactory wettability to the first silicon carbide ceramic 1 and the second silicon carbide ceramic 2.

Further, from the viewpoint of obtaining higher joint strength, as illustrated in FIGS. 1A to 2B, it is preferable that the first coating layer 4 is provided on an area extending from the surface of the joint layer 3 to the surface of both the first silicon carbide ceramic 1 and the second silicon carbide ceramic 2.

Also, in the ceramic joint body 10 of the present embodiment, providing the second coating layer 5 on the surface of the first coating layer 4 will hardly decrease the joint strength when it is exposed to a highly corrosive gas environment or a highly corrosive liquid environment. This is caused by the fact that the surface of the first coating layer 4 is covered with the second coating layer 5 which is less likely to be affected by highly corrosive halogen-based gases or liquids, for example, fluorine-based gas such as CF₄, aqueous hydrogen fluoride (HF) solution, and the like. When the first coating layer 4 is exposed to the aforementioned environment, metallic silicon serving as the primary component of the first coating layer 4 is converted into fluoride and the sublimed or eluted; thereby lowering the joint strength.

Here, the silicon carbide ceramic in the present embodiment indicates that silicon carbide occupies not less than 70 mass% among all components of 100 mass% constituting the silicon carbide ceramic. Further, the primary component in the first coating layer 4 indicates a component exceeding 50 mass% among all components of 100 mass% constituting the first coating layer 4. Furthermore, the primary component in the second coating layer 5 indicates a component exceeding 50 mass% among all components of 100 mass% constituting the second coating layer 5.

Further, the presence of silicon carbide ceramic can be checked by the following method. First, from the value of 2θ (2θ indicates a diffraction angle) obtained by using an X-ray diffractometer (XRD), identification is performed by using a JCPDS card to check the presence of silicon carbide. Next, for example, ICP (Inductively Coupled Plasma) emission spectrophotometer (ICP) is used to perform quantitative analysis of silicon (Si). Then, the content of Si measured by ICP is converted into silicon carbide (SiC), and when the content of silicon carbide is not less than 70 mass%, it is a silicon carbide ceramic.

Further, the presence and the content of metallic silicon serving as the primary component of the first coating layer 4 can also be checked and obtained, respectively, as follows.

First, for checking the presence of metallic silicon, from the value of 2θ obtained by XRD by sampling the first coating layer 4, identification is performed by using a JCPDS card to check the presence of metallic silicon. Or, it may be checked by using the scanning electron microscope (SEM) and the attached energy dispersive X-ray analyzer (EDS). Specifically, the sampled material is fabricated into a mirror surface (hereinafter, simply referred to as a mirror surface) by using an abrasive such as diamond abrasive grains. This mirror surface is observed by using SEM and then X-rays are projected from EDS attached to the SEM onto a portion other than a crystal grain observed in an observation region, to check the presence of metallic silicon.

For the content of metallic silicon serving as the primary component of the first coating layer 4, surface analysis of the mirror surface is performed by using an electron probe microanalyzer (EPMA) and a region where metallic silicon is confirmed and the presence of other components (for example, carbon or the like) is not confirmed is regarded as a region of metallic silicon. Then, the ratio of the area (area%) of the portion, considered as the region of metallic silicon, is assumed as the ratio of the volume (volume%) and the content of metallic silicon is determined by calculation using the density of the contained component.

Here, as an example of calculation, a case where the first coating layer 4 is made from metallic silicon and silicon carbide will be described. The volume% of metallic silicon considered from the ratio of the area obtained from the surface analysis, is V_{Si} and the volume% of silicon carbide is V_{SiC}. Then, the density of metallic silicon D_{Si} (2.33 g/cm³) and the density of silicon carbide D_{SiC} (3.21 g/cm³) are used and substituted into W_{Si}=((D_{Si}×V_{Si})/ (D_{Si}×V_{Si}+D_{SiC}×V_{SiC}))×100, to obtain a content W_{Si} of metallic silicon. Here, the pores are excluded from calculation. Furthermore, when other components are included, it is preferable to calculate by using the volume% and density of those components.

Also, when the first coating layer 4 is made from metallic silicon and silicon carbide, the content of metallic silicon may be obtained by using ICP and carbon analyzer. First, the total content of silicon contained in the first coating layer 4 is obtained by the measurement using ICP. Next, the content of carbon (C) contained in the first coating layer 4 is obtained by the measurement using carbon analyzer. Then, the content of C is converted into SiC to obtain the content of SiC, and the content of C is subtracted from the content of SiC to obtain the content of Si in SiC. Next, the content of Si in SiC is subtracted from the total content of silicon contained in the first coating layer 4, obtained by the measurement using ICP, to obtain the content of metallic silicon. Then, when the content of metallic silicon calculated from the above-mentioned calculation formula or the like exceeds 50 mass%, the metallic silicon is the primary component of the first coating layer 4.

Further, the presence of Ni, Cu, Al, and Cr contained in the second coating layer 5 can be checked by measurement using XRD, EDS, or EPMA. As for the content, the second coating layer 5 may be sampled to carry out quantitative analysis using ICP for the components measured above. When the component confirmed by the above measurement is any one of Ni, Cu, Al, or Cr and exceeds 50 mass% among all components of 100 mass% constituting the second coating layer 5, any one of Ni, Cu, Al or Cr is the primary component.

Further, the distinction of boundary between the first coating layer 4 and the second coating layer 5 may be performed by observing the surface fabricated on the mirror surface, as a measurement surface, by using the reflected electron image of SEM at a magnification of, for example, not less than 150 times and not greater than 1000 times, or the distinction may be performed based on the difference in constituent elements obtained by surface analysis of each element by using EPMA.

In the ceramic joint body 10 of the present embodiment, it is preferable that the second coating layer 5 is provided on the surface of the first silicon carbide ceramic 1 and the second silicon carbide ceramic 2, i.e., the surface of the first silicon carbide ceramic 1 and the second silicon carbide ceramic 2 is covered with the second coating layer 5.

With such a configuration satisfied, the corrosion resistance of the joint portion as well as the first silicon carbide ceramic 1 and the second silicon carbide ceramic 2 is improved. Further, if it is connected to the second coating layer 5 provided on the surface of the first coating layer 4, the covering region of the second coating layer 5 is increased; thereby further improving joint strength. Here, from the viewpoint of corrosion resistance and joint strength, it is preferable that the entire outer surface of the ceramic joint body 10 is covered with the second coating layer 5. However, when the ceramic joint body 10 is fitted with another member or the like, or covered by another member leaving portions not exposed to corrosive environment, these portions may not be necessarily covered with the second coating layer 5.

The joint layer 3 contains silicon carbide and metallic silicon, wherein the total content as of silicon carbide and metallic silicon is not less than 85 mass% among all components of 100 mass% constituting the joint layer 3. With such a configuration satisfied, the metallic silicon is located in the periphery of the silicon carbide serving as an aggregate, thereby connecting the silicon carbide to each other such that the voids around the silicon carbide are reduced. Since the metallic silicon has a satisfactory wettability to the first silicon carbide ceramic 1 and the second silicon carbide ceramic 2, the joint strength is enhanced. Further, when the joint layer 3 contains silicon carbide, a linear expansion coefficient of the joint layer 3 approaches near to each of the linear expansion coefficient of the first silicon carbide ceramic 1 and second silicon carbide ceramic 2. Thus, even when the joint layer 3 is repeatedly exposed to high temperatures, cracks are less likely to occur therein.

The mass ratio of silicon carbide and metallic silicon (silicon carbide content/metallic silicon content) in the joint layer 3 is preferably not less than 1.3 and not greater than 2.5. When the mass ratio of silicon carbide and metallic silicon is within the above range, the periphery of silicon carbide is sufficiently covered with metallic silicon, thereby suppressing aggregation of silicon carbides and particularly reducing the voids in the periphery of the silicon carbide. Thus, joining strength is enhanced further.

Here, as for the distinction of boundary between the joint layer 3 and the first coating layer 4, in the present embodiment, the joint layer 3 is considered between the joint surface of the first silicon carbide ceramic 1 and the joint surface of the second silicon carbide ceramic 2; otherwise, the first coating layer 4 is considered.

Then, the presence or absence of silicon carbide and metallic silicon in the joint layer 3 may be checked using XRD. Si and C are also checked in crystal grains using SEM and attached EDS, and when Si is confirmed in a portion other than crystal grains, the presence of silicon carbide and metallic silicon may be concluded.

Next, as for the total content of silicon carbide and metallic silicon in the joint layer 3, if the existence of a silicide other than silicon carbide is not confirmed in XRD, the content of C may be first measured using carbon analyzer, and then, the content of Si may be measured using ICP and added. Here, when the existence of the silicide other than silicon carbide is confirmed in XRD, the surface analysis of the mirror surface may be performed by using the EPMA to determine the content by calculation using the density of the contained component assuming that the ratio of the area (area%) is the ratio of the volume (volume%).

Further, it is preferable that the dispersion degree of the particles of silicon carbide in the joint layer 3 is not less than 0.3 and not greater than 0.9. As such, when the dispersion degree is not less than 0.3 and not greater than 0.9, the crystal grains of silicon carbide are dispersedly present in the joint layer 3. Thus, even when the joint layer 3 is repeatedly exposed to high temperatures so that cracks occur and develop, the development of cracks is blocked by the crystal grains of silicon carbide. Thus, high joining strength can be maintained even under a high-temperature environment.

Here, the dispersion degree indicates a value obtained by dividing the standard deviation of the distances between centroids by the average of the distance between centroids and is a value derived by analyzing an image obtained by observation of a cross section of the joint layer 3 in accordance with a method of distance between centroids by using image analysis software "Azo-kun" (trade name, manufactured by Asahi Kasei Engineering Cooperation). Then, the cross section of the joint layer 3 indicates a mirror surface obtained by a method wherein the ceramic joint body 10 is cut and the joint layer 3 is polished with a polishing cloth (for example, polishing cloth (code No. 410 or 9450) manufactured by Engis Japan Corporation). The polishing cloth has diamond abrasive grains having an average particle diameter of 0.1 µm. Further, the image indicates an image of a region having an area of 1.1 x 10⁴ µm² (for example, a horizontal length of 128 µm and a vertical length of 86 µm) obtained by selecting a portion, where the particles of silicon carbide are observed on the average, from the cross section of the joint layer 3 and then observing at a magnification of 1000 times using the SEM. Here, as for the setting conditions at the time of analysis, the lightness of particles is set to dark, the binarization method is set to automatic, and the small figure removal area is set to 0 µm. In such conditions, measurement may be performed.

Further, in the ceramic joint body 10 of the embodiment, it is preferable that no pore is present in the joint layer 3. In case where no pore is present in the joint layer 3, when a thermal shock is applied on the ceramic joint body 10, cracks originating from pore do not occur. Thus, reliability against a thermal shock is improved. Here, the presence or absence of pores in the joint layer 3 may be judged from the reflected electron image of SEM. It is also preferable that no pore is present in the first coating layer 4 and the second coating layer 5. Here, the reflected electron images of SEM are analyzed by image analysis software or the like, and when the area occupation ratio of pores calculated by this analysis is less than 0.2%, it is regarded as absence of pores.

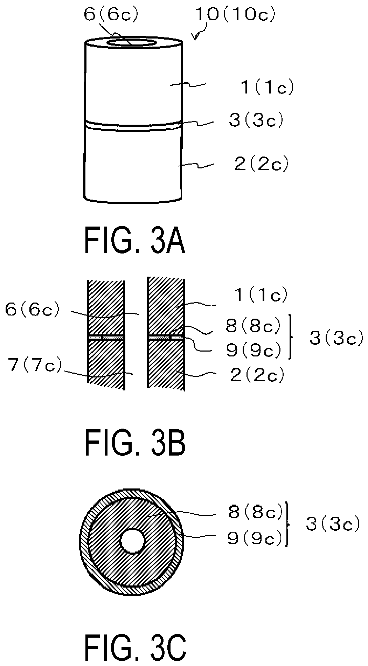

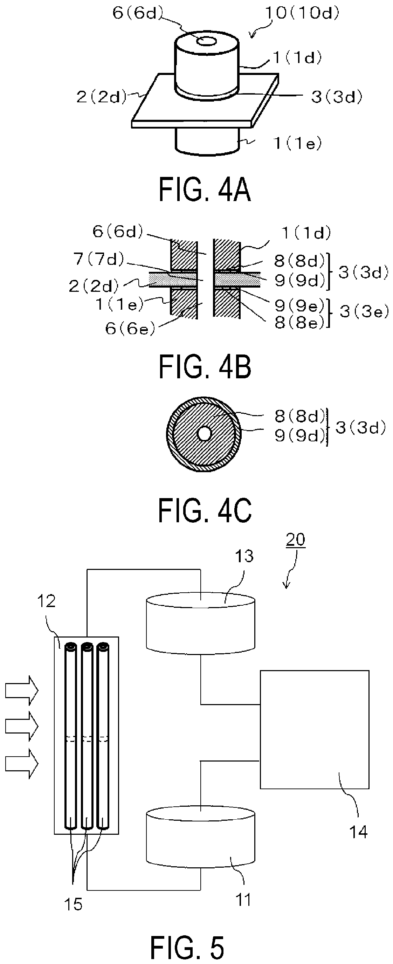

Next, FIGS. 3A to 4C illustrate yet another example of a ceramic joint body of the present embodiment, wherein FIGS. 3A and 4A are perspective views, FIGS. 3B and 4B are longitudinal sectional views of the joint portion, and FIGS. 3C and 4C are cross-sectional views of the joint layer. FIGS. 3A to 3C illustrate an example that the shapes of the first silicon carbide ceramic 1c and the second silicon carbide ceramic 2c are both cylindrical. Further, FIGS. 4A to 4C illustrates an example that one flat plate shape second silicon carbide ceramic 2d is joined so as to be sandwiched between two cylindrical shape first silicon carbide ceramics 1d and 1e. Here, in FIGS. 3A to 4C, since the drawings are complicated, the first coating layer 4 and the second coating layer 5 are not illustrated.

In the configuration that the first silicon carbide ceramic 1 has a first through hole 6, the second silicon carbide ceramic 2 has a second through hole 7; and the first through hole 6 and the second through hole 7 communicate with each other, as illustrated in FIGS. 3C and 4C, the joint layer 3 is formed in such a manner that a first region 8 containing silicon carbide as a primary component is provided on an inner periphery side and a second region 9 containing metallic silicon as a primary component provided on the outer periphery side to surround the first region 8. Here, as illustrated in the figure, the inner periphery side indicates a through-hole side.

Here, in the ceramic joint body 10c illustrated in FIGS. 3A to 3C and the ceramic joint body 10d illustrated in FIGS. 4A to 4C, the first through hole 6 and the second through hole 7 communicate with each other, so if this communication portion is considered as a flow passage, it can be used as a flow passage body. Hereinafter, explanation will be given by assuming the case of using flow passage body.

When the above-mentioned configuration is satisfied, the ceramic joint body 10 of the present embodiment has high joint strength and excellent airtightness. Thus, fluid leakage from the joint portion is less. This is caused by the fact that even if the first region 8 provided on the inner periphery side contributes to high joint strength and the fluid passes through the gaps present in the first region 8, the second region 9 containing metallic silicon as a primary component has small gaps and is provided so as to surround the first region 8; thus, the leakage of fluid in the second region 9 can be suppressed. Therefore, the ceramic joint body 10 constituted as mentioned above is suitable when hazardous fluid is used such as corrosive gas and corrosive liquid and the like.

Here, the primary component in the first region 8 indicates a component exceeding 50 mass% among all components of 100 mass% constituting the first region 8, and the primary component in the second region 9 indicates a component exceeding 50 mass% among all components of 100 mass% constituting the second region 9.

Then, the presence or absence of silicon carbide in the first region 8 and metallic silicon in the second region 9 may be checked using XRD. When Si and C are also observed in the crystal grains using SEM and attached EDS, the presence of silicon carbide may be concluded. Further, in a case where the presence of elements is confirmed using EDS, when only Si is confirmed, the presence of metallic silicon may be concluded.

Next, as for the distinction of boundary between the first region 8 and the second region 9, first, surface analysis of the mirror surface of the joint layer 3 is performed by using EPMA, to confirm whether there is a portion having a different content or component in the joint layer 3.

At this time, although Si is confirmed all over, the presence of C is confirmed only on the inner periphery side. Thus, places where Si and C are present on the inner periphery side are overlapped. When there is no overlapping between Si and other components on the outer periphery side, sampling is performed from each of the inner and the outer periphery sides. If the content of silicon carbide on the inner periphery side obtained by any of the above-mentioned methods exceeds 50 mass% and the content of metallic silicon on the outer periphery side exceeds 50 mass%, the inner periphery side is the first region 8 and the outer periphery side is the second region 9. In such a configuration, the distinction of boundary between the first region 8 and the second region 9 can be performed by the existence position of C.

Further, distinction between metallic silicon and silicon carbide may be performed by observing the mirror surface by using a reflected electron image of the SEM with appropriately selecting magnification, for example, not less than 150 times and not greater than 1000 times, or linear analysis of Si between the inner and the outer periphery side in the mirror surface may be performed using EPMA and thereby the distinction may be performed on the basis of change in the content of Si or similarly the change in the content of SiC. Then, a boundary may be set where either metallic silicon or silicon carbide exceeds 50 mass%.

Here, when both the first region 8 and the second region 9 contain silicon carbide and metallic silicon, a linear analysis of C is performed from the inner periphery side toward the outer periphery side using EPMA to confirm the change in the content of C and thereby distinction may be performed on the basis of portion exceeding 50 mass% in terms of conversion from C content to SiC. Since the atomic weight of C is 12, the atomic weight of Si is 28, and the molecular weight of SiC is 40, when SiC is 50 mass%, C is 15 mass%. Therefore, distinction may be performed at a portion where C exceeds 15 mass%. Here, in the linear analysis, it is also preferable to check the change in the content of Si.

In the configuration that the first silicon carbide ceramic 1 has a first through hole 6, the second silicon carbide ceramic 2 has a second through hole 7; and the first through hole 6 and the second through hole 7 communicate with each other, in order to have excellent joint strength and airtightness, the area occupation ratio of the second region 9 among the joint surface area of 100% between the first silicon carbide ceramic 1 and the second silicon carbide ceramic 2 is preferably not less than 10% and not greater than 40%.

As for the area occupation ratio of the second region 9, a distinction is performed by linear analysis between the first region 8 and the second region 9 described above at least on two orthogonal lines. The boundary points thus obtained from this result are connected to form a corresponding circle, and assuming this circle as boundary, the area occupation ratio of the second region 9 may be determined.

Further, it is preferable that the dispersion degree of the particles of silicon carbide in the first region 8 is not less than 0.3 and not greater than 0.9. When the dispersion degree of the particles of silicon carbide in the first region 8 of the joint layer 3 is not less than 0.3 and not greater than 0.9, the crystal grains of silicon carbide are dispersedly present in the first region 8. Thus, even when the joint layer 3 is repeatedly exposed to high temperatures so that cracks occur and develop, the development of cracks is blocked by the crystal grains of silicon carbide. Thus, high joining strength can be maintained even under a high-temperature environment. Here, the dispersion degree of the particles of silicon carbide in the first region 8 can be obtained by a method similar to that in the case of dispersion degree of the joint layer 3 described above.

Further, in each of the first silicon carbide ceramic 1 and the second silicon carbide ceramic 2 constituting the ceramic joint body 10 of the present embodiment, it is preferable that the relative density is not less than 95 volume% and not greater than 99 volume%. The relative density of the first silicon carbide ceramic 1 and the second silicon carbide ceramic 2 may be obtained by dividing the apparent density, acquired according to JIS R 1634-1998, by the theoretical density of silicon carbide ceramic.

Then, the first silicon carbide ceramic 1 and the second silicon carbide ceramic 2 may be a combination of different relative densities depending on the environment to be used. For example, a ceramic having a high relative density may be used in a portion where heat received from the outside is desired to be efficiently transferred to the fluid, or a ceramic having a low relative density may be used in a portion where the heat of the fluid is desired not to be radiated.

Further, when the ceramic joint body 10 of the present embodiment has a flow passage, i.e., is a flow passage body, this flow passage body has excellent durability. Thus, a heat exchanger comprising a flow passage body has high reliability capable of withstanding long term usage. In particular, it may be suitably used in a corrosive gas environment or a corrosive liquid environment.

FIG. 5 is a schematic drawing of a concentrating photovoltaic power generator illustrating an example of application of a heat exchanger comprising a flow passage body made from the ceramic joint body of the present embodiment.

In the concentrating photovoltaic power generator 20 illustrated in FIG. 5, a medium is heated with the heat of concentrated sunlight and then electricity is generated by using the heat of the heated medium. The concentrating photovoltaic power generator 20 includes a low-temperature medium storage tank 11, a heat exchanger (collector) 12, a high-temperature medium storage tank 13, and an energy conversion system 14. The flow to power generation includes: the medium is pressure fed from the low-temperature medium storage tank 11 to the heat exchanger 12; the concentrated sunlight is projected onto the heat exchanger 12 to heat the medium; the heated medium is stored into the high-temperature medium storage tank 13; and then, the thermal energy of the heated medium pressure fed from the high-temperature medium storage tank 13 is used to generate electricity by the energy conversion system 14. Here, the heat-deprived medium is sent to the low-temperature medium storage tank 11 to repeat this cycle. Due to repetition, electricity can be obtained without using fuel sources and without discharging greenhouse gases. Thus, it is useful in the economic and the environmental aspects.

In the concentrating photovoltaic power generator 20 having the configuration as illustrated in FIG. 5, the ceramic joint body 10 receiving heat of concentrated sunlight is an elongated member of several meters and must have resistance against high temperatures. However, the ceramic joint body 10 of the present embodiment has high joint strength and excellent airtightness; thus, it has high reliability that electricity can stably be generated for a long period of time.

Next, an example of manufacturing method for the ceramic joint body of the present embodiment will be described.

First, the first silicon carbide ceramic 1 and the second silicon carbide ceramic 2 are prepared. Next, paste (e.g., an organic solvent containing silicon carbide powder, metallic silicon powder, carbon powder, and ethyl cellulose or an acrylic binder) for forming the joint layer 3 is applied onto the joint surface of one of the first silicon carbide ceramic 1 and the second silicon carbide ceramic 2. The joint surfaces are then joined and pressure is applied in a direction perpendicular to the joint surfaces. Here, in order to make the content of silicon carbide and metallic silicon in the joint layer 3 not less than 85 mass%, the mass of the silicon carbide powder and the metallic silicon powder may be set to not less than 85 mass% among the mass total 100 mass% of silicon carbide powder, metallic silicon powder, and other powders (for example, carbon power or the like). Further, the pressure may be applied depending on the self-weight of the member to be joined.

In order for the joint layer 3 to have the first region 8 and the second region 9, a paste for forming the first region 8 and a paste for forming the second region 9 are separately prepared. Here, in the paste for forming the first region 8, the mass of the silicon carbide powder is greater than 50 mass%, preferably not less than 70 mass%, among the mass total 100 mass% of silicon carbide powder and other powders (for example, metallic silicon powder, carbon powder, or the like). On the other hand, in the paste for forming the second region 9, the mass of the metallic silicon is greater than 50 mass%, preferably not less than 70 mass% among the mass total 100 mass% of metallic silicon powder and other powders (for example, silicon carbide powder, carbon powder, or the like). Then, the paste for forming the first region 8 is applied onto the inner periphery side of the joint surface of one of the first silicon carbide ceramic 1 and the second silicon carbide ceramic 2. Then, the paste for forming the second region 9 is applied onto the outer periphery side of the paste for forming the first region 8. The joint surfaces are then joined together.

Further, in order to make the dispersion degree of the particles of silicon carbide in the joint layer 3 or the first region 8 to be not less than 0.3 and not greater than 0.9, for example, an agitation defoaming device is used; an organic solvent, silicon carbide powder, ethyl cellulose or an acrylic binder, and carbon powder are charged into a storage container in the agitation defoaming device; the storage container is rotated at a rotation speed of 2000 rpm for 2 to 12 minutes; and then, reverse rotation is performed at a rotation speed of 2200 rpm for 30 seconds. The resulting mixture may be used as paste for forming the joint layer 3 or paste for forming the first region 8.

Then, in a pressurized state, paste (for example, an organic solvent containing metallic silicon powder and ethyl cellulose or an acrylic binder) for forming the first coating layer 4 is applied so as to cover the already applied paste for forming the joint layer 3 and spread over at least one surface of the first silicon carbide ceramic 1 and the second silicon carbide ceramic 2. Applied paste is then dried at a temperature of not lower than 80°C and not higher than 200°C for a holding time of not less than 8 hours and not more than 14 hours.

Thereafter, heat treatment is performed in an inert-gas atmosphere such as argon at a pressure of 1 atmosphere, at a holding temperature of not lower than 1400°C and not higher than 1500°C for a holding time of not less than 30 minutes and not more than 90 minutes. Here, it is preferable that the temperature elevation rate from 1100°C to the holding temperature is set to be, for example, not less than 2°C/minute and not greater than 2.5°C/minute.

Further, in order to obtain the ceramic joint body 10 having no pores in the joint layer 3, in an inert-gas atmosphere such as argon, the temperature is raised to the holding temperature at a pressure lower than 1 atmosphere and the pressure is set to 1 atmosphere upon attaining the holding temperature; and then, heat treatment may be performed at a holding temperature of not lower than 1400°C and not higher than 1500°C for a holding time of not less than 30 minutes and not more than 90 minutes.

Next, after the first coating layer 4 is formed and the joint body at the stage of the heat treatment is washed and dried, the second coating layer 5 containing any one of Ni, Cu, Al or Cr as a primary component is formed by the following method so as to cover the first coating layer 4.

First, as a first method, any one of Ni, Cu, Al or Cr is plated on the portion of the first coating layer 4 by an electroless plating method. The thickness of the plating may be set to about 5 to 20 µm.

As a second method, thermal spraying is performed on the portion of the first coating layer 4 at 550 to 800°C by a plasma spraying method using any of metal powders such as NiAl powder, NiCr powder, AlCr powder, CuAl powder, or the like. The second coating layer 5 comprises at least one crystal phase of NiAl, Ni₃Al, Ni₂Al₃, Cr₂Al, CuAl₂, and Cu₃Al₂. The thickness of the second coating layer 5 serving as a thermal spraying layer may be set to about 5 to 50 µm.

Also in the case of forming the second coating layer 5 on the surfaces of the first silicon carbide ceramic 1 and the second silicon carbide ceramic 2, the second coating layer 5 containing any one of Ni, Cu, Al or Cr as the primary component may be formed by the first or the second method described above. Here, if the surface roughness of the joint body before forming the second coating layer 5 is increased by, for example, sand blasting method or the like, the second coating layer 5 may be firmly fixed.

The ceramic joint body 10 can be manufactured by using the above manufacturing method.

Hereinafter, examples of the present invention will be specifically described. However, the present invention is not limited to these examples.

### Example 1

First, a first silicon carbide ceramic and a second silicon carbide ceramic having a tubular body were prepared. Here, the ceramic joint body to be produced in Example 1 had a test piece dimension according to JIS R 1624-2010 such that it could be cut out including a joint layer. Then, paste (terpineol serving as an organic solvent containing silicon carbide powder, metallic silicon powder, carbon powder, and ethyl cellulose) for forming the joint layer was applied onto the end face serving as the joint surface of the first silicon carbide ceramic such that a thickness of the joint layer may become 40 µm. Thereafter, the second silicon carbide ceramic was placed thereon.

Here, as paste for forming the joint layer, the paste in which the amount of each powder was adjusted so that the mass ratio in the joint layer becomes carbon powder 1, metallic silicon powder and silicon carbide powder as shown in Table 1, and terpineol was in 30 parts by mass and ethyl cellulose was in 12 parts by mass relative to the total of 100 parts by mass of the powder was used. Furthermore, the pressure in the direction perpendicular to the joint surface was applied depending on the self-weight of the second silicon carbide ceramic. Here, Table 1 shows the mass ratio of silicon carbide to metallic silicon (silicon carbide/metallic silicon) in the joint layer of each sample.

Then, in all samples excluding the Sample No. 3, the paste (an organic solvent containing silicon powder and ethyl cellulose) for forming the first coating layer was applied such that the first coating layer containing metallic silicon as the primary component may coat the surface of the paste for forming the joint layer and spread over the first silicon carbide ceramic and the second silicon carbide ceramic.

Then, the samples were held and dried at 140°C for 11 hours. Thereafter, heat treatment was performed in an argon atmosphere at a pressure of 1 atmosphere, at a holding temperature of 1430°C for a holding time of 60 minutes, and the temperature elevation rate from 1100°C to the holding temperature of 1430°C was set to 2.2°C/minute, so as to obtain a joint body in which the first silicon carbide ceramic and the second silicon carbide ceramic were joined together.

Next, for Sample Nos. 6 to 15, a second coating layer made from plating of the elements described in Table 1 was formed on the first coating layer by an electroless plating method. Further, for Sample Nos. 1 to 3, the second coating layer made from Ni plating was formed on the entire surface of the ceramic joint body. Here, the thickness of the plating layer was 10 µm in all samples, and for Sample Nos. 4 and 5, no second coating layer was formed. By the above method, ceramic joint bodies of Sample Nos. 1 to 15 were obtained.

Then, according to JIS R 1624-2010, a test piece (3 mm high, 4 mm wide, and 50 mm long) having a joint layer positioned in the center portion in the longitudinal direction was cut out and the four-point flexural strength was measured. The joint strength is shown in the column joint strength A in Table 1.

Next, the ceramic joint bodies of Sample Nos. 1 to 15 produced by the method similar to described above was left for 10 days in an aqueous solution containing 1 mass% concentration of hydrogen fluoride (HF). Thereafter, according to JIS R 1624-2010, the test piece having a joint layer positioned in the center portion in the longitudinal direction was cut out and the four-point flexural strength was measured. The joint strength is shown in the column joint strength B in Table 1. The results are shown in Table 1.

**[Table 1]**

| Sample No. | Metallic silicon in the joint layer | Silicon carbide in joint layer | Silicon carbide/metallic silicon in joint layer | First coating layer | Second coating layer | Formation position of second coating layer | Joint strength A (MPa) | Joint strength B (MPa) |
|---|---|---|---|---|---|---|---|---|
| 1 | 54 | 45 | 0.8 | Present | Ni | Entire base body | 310 | 310 |
| 2 | 45 | 54 | 1.2 | Present | Ni | Entire base body | 320 | 317 |
| 3 | 45 | 54 | 1.2 | Absent | Ni | Entire base body | 270 | 263 |
| 4 | 45 | 54 | 1.2 | Present | Absent | Absent | 290 | 85 |
| 5 | 54 | 45 | 0.8 | Present | Absent | Absent | 280 | 54 |
| 6 | 45 | 54 | 1.2 | Present | Ni | First coating layer | 310 | 301 |
| 7 | 54 | 45 | 0.8 | Present | Ni | First coating layer | 300 | 290 |
| 8 | 45 | 54 | 1.2 | Present | Cu | First coating layer | 309 | 299 |
| 9 | 45 | 54 | 1.2 | Present | Al | First coating layer | 310 | 300 |
| 10 | 45 | 54 | 1.2 | Present | Cr | First coating layer | 311 | 301 |
| 11 | 43 | 56 | 1.3 | Present | Ni | First coating layer | 319 | 306 |
| 12 | 37 | 62 | 1.7 | Present | Ni | First coating layer | 320 | 308 |
| 13 | 32 | 67 | 2.1 | Present | Ni | First coating layer | 320 | 307 |
| 14 | 29 | 70 | 2.5 | Present | Ni | First coating layer | 319 | 307 |
| 15 | 27 | 72 | 2.7 | Present | Ni | First coating layer | 308 | 298 |

As is clear from the results shown in Table 1, in Sample Nos. 1, 2, and 6 to 15, the first coating layer containing metallic silicon as a primary component is provided on the surface of the joint layer, and the second coating layer containing any one of Ni, Cu, Al or Cr as a primary component is provided on the surface of the first coating layer. Thus, the joint strength A was high and the difference between the joint strength A and the joint strength B was small as compared to Sample No. 3 having no first coating layer and Sample Nos. 4 and 5 having no second coating layer. As clear from these results, Sample Nos. 1, 2, and 6 to 15 had excellent durability and corrosion resistance.

Further, in Sample Nos. 1 and 2, since the formation position of the second coating layer was an entire base body of the ceramic joint body, the difference between the joint strength A and the joint strength B was smaller than Sample Nos. 6 to 15 where the formation position was only first coating layer. Thus, it has been found that excellent durability and corrosion resistance are further achieved by adopting the configuration like Sample Nos. 1 and 2.

Further, as compared to Sample Nos. 6, 7, and 11 to 15 having different mass ratios of silicon carbide/metallic silicon in the joint layer, Sample Nos. 11 to 14 had mass ratio of silicon carbide/metallic silicon not less than 1.3 and not greater than 2.5; thus, they had particularly high joint strength A and further excellent durability.

### Example 2

First, silicon carbide powder and 30 parts by mass of terpineol and 12 parts by mass of ethyl cellulose relative to 100 parts by mass of silicon carbide powder were prepared. Then, these were charged into the storage container in the agitation defoaming device and the storage container was then rotated at a rotation speed of 2000 rpm for a time shown in Table 2. Thereafter, reverse rotation was performed at a rotation speed of 2200 rpm for 30 seconds to obtain a paste for forming the joint layer. The paste for forming the joint layer was then applied such that the thickness of the joint layer may become 0.15 mm.

Next, the paste for forming the first coating layer was applied such that the first coating layer containing metallic silicon as the primary component may coat the surface of the paste for forming the joint layer and spread over the first silicon carbide ceramic and the second silicon carbide ceramic. Here, the paste for forming the first coating layer was composed of metallic silicon powder and 30 parts by mass of terpineol and 12 parts by mass of ethyl cellulose relative to 100 parts by mass of metallic silicon powder. Each sample was then prepared by a method similar to Sample No. 2 of Example 1 except that the thickness of the joint layer was changed and the atmosphere in the heat treatment was changed to a vacuum atmosphere. The second coating layer was a Ni plating layer having a thickness of 10 µm.

Then, according to JIS R 1624-2010, the test piece (3 mm high, 4 mm wide, and 50 mm long) having a joint layer positioned in the center portion in the longitudinal direction was cut out and the four-point flexural strength was measured. The measured values are shown in Table 2 as joint strength σ₀.

Next, samples prepared by the above-mentioned method were used and placed in a thermal treatment apparatus. The temperature was raised, and the samples were held at 1250°C for 10 hours in an atmosphere having an oxygen partial pressure of 10⁻⁹ MPa and containing water vapor. The temperature was then lowered to an ambient temperature. Considering the process of temperature rise, holding, and temperature lowering as one cycle, a cycle test in which 50 cycles were repeated was performed.

Thereafter, according to JIS R 1624-2010, the test piece having a joint layer positioned in the center portion in the longitudinal direction was cut out and the four-point flexural strength was measured. The measured values are shown in Table 2 as joint strength σ₁. Further, a decreasing ratio Δσ (%:(σ₀-σ₁)/σ₀×100) of the joint strength before and after the cycle test was calculated and is shown in Table 2.

Further, in order to confirm the leak amount due to the difference in the configuration of the joint layer, a cycle test was performed using the sample prepared by the above method except that the first coating layer and the second coating layer were not formed, and according to the vacuum spraying method (a spray method) specified in JIS Z 2331-2006, the leak amount of helium gas at the joint portion was measured at an ambient temperature. In Table 2, "1" indicates a sample having leak amount not less than 10⁻¹⁰ Pa·m³/second and not greater than 10⁻⁹ Pa·m³/second, and "2" indicates a sample having leak amount lower than 10⁻¹⁰ Pa·m³/second.

Further, each sample was cut such that the joint layer may be checked. The cross-section of the joint layer was then polished using a polishing cloth (polishing cloth (code No. 410) manufactured by Engis Japan Corporation) to obtain a mirror surface. The polishing cloth has diamond abrasive grains having an average particle diameter of 0.1 µm. The obtained mirror surface was then observed using SEM at a magnification of 1000. Then, a portion where the particles of silicon carbide were observed on the average in the joint layer was selected. An image of a region having an area of 1.1×10⁴ µm² (a horizontal length of 128 µm and a vertical length of 86 µm) was used to calculate the dispersion degree of the particles of silicon carbide in the joint layer in accordance with a method of distance between centroids by using image analysis software "Azo-kun" (trade name, manufactured by Asahi Kasei Engineering Cooperation). The obtained values are shown in Table 2. Here, as for the setting conditions at the time of analysis, the lightness of particles was set to dark, the binarization method was set to automatic, and the small figure removal area was set to 0 µm. In such conditions, measurement was performed. Results are shown in Table 2.

**[Table 2]**

| Sample No. | Rotation time (Minute) | Dispersion degree | Joint strength | | Decrease ratio of joint strength Δσ(%) | Leak |
|---|---|---|---|---|---|---|
| | | | σ₀ (MPa) | σ₁ (MPa) | | |
| 16 | 1 | 0.2 | 319 | 289 | 9.4 | 1 |
| 17 | 2 | 0.3 | 322 | 302 | 6.2 | 2 |
| 18 | 7 | 0.6 | 324 | 306 | 5.6 | 2 |
| 19 | 12 | 0.9 | 326 | 306 | 6.1 | 2 |
| 20 | 14 | 1.0 | 320 | 292 | 8.8 | 1 |

As shown in Table 2, in Sample Nos. 17 to 19, the decrease ratio of the joint strength was small and the leak amount was low in the cycle test. As clear from these results that the dispersion degree of the particles of silicon carbide in the joint layer was not less than 0.3 and not greater than 0.9; thus, excellent durability was obtained.

### Example 3

First, a first silicon carbide ceramic and a second silicon carbide ceramic having tubular bodies of same shape were prepared.

Paste for forming the joint layer was prepared by dividing into the paste for forming the first region and the paste for forming the second region. The paste for forming the first region was prepared such that the mass ratio of silicon carbide powder, metallic silicon powder, and carbon powder was 90, 9, and 1, respectively. Further, the paste for forming the second region was prepared such that the mass ratio of silicon carbide powder, metallic silicon powder, and carbon powder was 9, 90, and 1, respectively. In Sample Nos. 21 to 25, paste for forming the first region was applied on the inner side of the end face serving as the joint surface of the first silicon carbide ceramic. The paste for forming the second region was then applied on the outer side of the paste for forming the first region. Thereafter, the second silicon carbide ceramic was placed thereon.

Further, in Sample No. 26, only the paste for forming the first region and in Sample No. 27, only the paste for forming the second region were applied onto the joint surface. Here, the area occupation ratio at the time of applying paste for forming the second region is shown in Table 3 as the area occupation ratio of the second region among the 100% area of the joint surface between the first silicon carbide ceramic and the second silicon carbide ceramic.

Each sample was then prepared by a method similar to Sample No. 2 of Example 1 except having the first and the second region in the joint layer. Further, the joint strength A and the joint strength B of each sample were measured by a method similar to Example 1.

Further, in order to confirm the leak amount due to the difference in the configuration of the joint layer, using the sample prepared by the above method except that the first coating layer and the second coating layer were not formed, the leak amount of helium gas at the joint portion of each sample was measured at an ambient temperature according to the vacuum spraying method (a spray method) specified in JIS Z 2331-2006. Here, the flow of helium gas was set from the inner periphery side to the outer periphery side of the test piece. In Table 3, "0" indicates a sample having leak amount exceeding 10⁻⁹ Pa·m³/second, "1" indicates a sample having leak amount not less than 10⁻¹⁰ Pa·m³/second and not greater than 10⁻⁹ Pa·m³/second, and "2" indicates a sample having leak amount lower than 10⁻¹⁰ Pa·m³/second.

**[Table 3]**

| Sample No. | Area occupation ratio second region (%) | Joint strength A (MPa) | Joint strength B (MPa) | Leak |
|---|---|---|---|---|
| 21 | 5 | 355 | 339 | 1 |
| 22 | 10 | 342 | 336 | 2 |
| 23 | 25 | 332 | 322 | 2 |
| 24 | 40 | 327 | 318 | 2 |
| 25 | 45 | 318 | 309 | 2 |
| 26 | 0 | 366 | 355 | 0 |
| 27 | 100 | 267 | 181 | 1 |

Sample Nos. 22 to 24 had excellent joint strength and low leak amount. From these results, it has been found that in order to obtain excellent corrosion resistance and durability under a corrosive gas environment or a corrosive liquid environment, in the configuration that the first region containing silicon carbide as the primary component is provided on the inner periphery side of the joint layer and the second region containing metallic silicon as the primary component is provided on the outer periphery side so as to surround the first region, the area occupation ratio of the second region is preferably from 10% to 40%.

### Example 4

First, a first silicon carbide ceramic and a second silicon carbide ceramic having tubular bodies of same shape were prepared.

Next, in order to prepare paste having different dispersion degree of silicon carbide, silicon carbide powder and 30 parts by mass of terpineol and 12 parts by mass of ethyl cellulose relative to 100 parts by mass of silicon carbide powder were prepared. These were then charged into the storage container in the agitation defoaming device and the storage container was then rotated at a rotation speed of 2000 rpm for a time shown in Table 4. Thereafter, reverse rotation was performed at a rotation speed of 2200 rpm for 30 seconds to obtain a paste for forming the first region. Each sample was then prepared by a method similar to Sample No. 21 of Example 3.

Then, the cycle test, joint strength measurement, leak amount measurement, and the calculation of dispersion degree were performed by a method similar to Example 2. Results are shown in Table 4.

**[Table 4]**

| Sample No. | Rotation time (Minute) | Dispersion degree | Joint strength | | Decrease ratio of joint strength Δσ(%) | Leak |
|---|---|---|---|---|---|---|
| | | | σ₀ (MPa) | σ₀₁ (MPa) | | |
| 28 | 1 | 0.2 | 355 | 339 | 4.5 | 1 |
| 29 | 2 | 0.3 | 358 | 354 | 1.1 | 2 |
| 30 | 7 | 0.6 | 360 | 356 | 1.1 | 2 |
| 31 | 12 | 0.9 | 356 | 353 | 0.8 | 2 |
| 32 | 14 | 1.0 | 355 | 339 | 4.5 | 1 |

As shown in Table 4, in Sample Nos. 29 to 31, the decrease ratio of the joint strength was small and the leak rate was also low even after performing the cycle test. Thus, in order to have excellent durability, it has been found that the dispersion degree of the particles of silicon carbide in the first region is preferably not less than 0.3 and not greater than 0.9.

### Reference Signs List

- 1: First silicon carbide ceramic
- 2: Second silicon carbide ceramic
- 3: Joint layer
- 4: First coating layer
- 5: Second coating layer
- 6: First through hole
- 7: Second through hole
- 8: First region
- 9: Second region
- 10: Ceramic joint body
- 11: Low-temperature medium storage tank
- 12: Heat exchanger (collector)
- 13: High-temperature medium storage tank
- 14: Energy conversion system
- 15: Flow passage body
- 20: Concentrating photovoltaic power generator

## Claims

1. A ceramic joint body(10), comprising:
a first silicon carbide ceramic (1);
a second silicon carbide ceramic (2);
a joint player (3) provided between the first silicon carbide ceramic (1) and the second silicon carbide ceramic (2);
a first coating layer (4) containing metallic silicon exceeding 50 mass% and provided on an area extending from the surface of the joint layer (3) to at least one surface of the first silicon carbide ceramic (1) and the second silicon carbide ceramic (2);
and a second coating layer (5) containing any one of Ni, Cu, Al or Cr exceeding 50 mass% and provided on the surface of the first coating layer (4),
wherein the joint layer (3) comprises silicon carbide and metallic silicon, where the total content of silicon carbide and metallic silicon is not less than 85 mass% among all components of 100 mass% constituting the joint player (3).

2. The ceramic joint body (10) according to claim 1, wherein the second coating layer (5) is provided on the surface of the first silicon carbide ceramic (1) and the second silicon carbide ceramic (2).

3. The ceramic joint body (10) according to claim 1 or 2, wherein a dispersion degree of the silicon carbide particles in the joint player (3) is not less than 0.3 and not greater than 0.9, the dispersion degree being determined according to the description.

4. The ceramic joint body (10) according to claim 1, wherein the first silicon carbide ceramic (1) has a first through hole (6), the second silicon carbide ceramic (2) has a second through hole (7); and the first through hole (6) and the second through hole (7) communicate with each other, wherein the joint layer (3) is formed in such a manner that a first region (8) containing silicon carbide exceeding 50 mass% is provided on an inner periphery side and a second region (9) containing metallic silicon exceeding 50 mass% provided on the outer periphery side to surround the first region (8).

5. The ceramic joint body (10) according to claim 4, wherein the dispersion degree of the silicon carbide particles in the first region (8) is not less than 0.3 and not greater than 0.9, the dispersion degree being determined according to the description.

6. A heat exchanger (12) comprising a flow passage body made from the ceramic joint body (10) according to any one of claims 1 to 5.

## Patentansprüche

1. Keramikverbindungskörper (10), aufweisend:
eine erste Siliciumcarbidkeramik (1),
eine zweite Siliciumcarbidkeramik (2),
eine Verbindungsschicht (3), die zwischen der ersten Siliciumcarbidkeramik (1) und der zweiten Siliciumcarbidkeramik (2) bereitgestellt ist,
eine erste Beschichtungsschicht (4), die mehr als 50 Masse-% metallisches Silicium enthält und auf einem Bereich vorgesehen ist, der sich von der Fläche der Verbindungsschicht (3) zu mindestens einer Fläche der ersten Siliciumcarbidkeramik (1) und der zweiten Siliciumcarbidkeramik (2) erstreckt,
und eine zweite Beschichtungsschicht (5), die irgendeines von Ni, Cu, Al oder Cr mit mehr als 50 Masse-% enthält und auf der Fläche der ersten Beschichtungsschicht (4) vorgesehen ist,
wobei die Verbindungsschicht (3) Siliciumcarbid und metallisches Silicium aufweist, wobei der Gesamtgehalt an Siliciumcarbid und metallischem Silicium nicht weniger als 85 Masse-% unter allen Komponenten von 100 Masse-% beträgt, die die Verbindungsschicht (3) bilden.

2. Keramikverbindungskörper (10) gemäß Anspruch 1, wobei die zweite Beschichtungsschicht (5) auf der Fläche der ersten Siliciumcarbidkeramik (1) und der zweiten Siliciumcarbidkeramik (2) vorgesehen ist.

3. Keramikverbindungskörper (10) gemäß Anspruch 1 oder 2, wobei ein Dispersionsgrad der Siliciumcarbidpartikel in der Verbindungsschicht (3) nicht weniger als 0,3 und nicht mehr als 0,9 beträgt, wobei der Dispersionsgrad gemäß der Beschreibung bestimmt wird.

4. Keramikverbindungskörper (10) gemäß Anspruch 1, wobei die erste Siliciumcarbidkeramik (1) ein erstes Durchgangsloch (6) aufweist, die zweite Siliciumcarbidkeramik (2) ein zweites Durchgangsloch (7) aufweist, und das erste Durchgangsloch (6) und das zweite Durchgangsloch (7) miteinander kommunizieren, wobei die Verbindungsschicht (3) auf derartige Weise ausgebildet ist, dass ein erster Bereich (8), der Siliciumcarbid mit mehr als 50 Masse-% enthält, auf einer Innenumfangsseite vorgesehen ist und ein zweiter Bereich (9), der metallisches Silicium mit mehr als 50 Masse-% enthält, auf der Außenumfangsseite vorgesehen ist, um den ersten Bereich (8) zu umgeben.

5. Keramikverbindungskörper (10) gemäß Anspruch 4, wobei der Dispersionsgrad der Siliciumcarbidpartikel in dem ersten Bereich (8) nicht weniger als 0,3 und nicht mehr als 0,9 beträgt, wobei der Dispersionsgrad gemäß der Beschreibung bestimmt wird.

6. Wärmetauscher (12), aufweisend einen Strömungsdurchgangskörper, der aus dem Keramikverbindungskörper (10) gemäß irgendeinem der Ansprüche 1 bis 5 hergestellt ist.

## Revendications

1. Un corps de liaison en céramique (10), comprenant :
une première céramique en carbure de silicium (1),
une seconde céramique en carbure de silicium (2),
une couche de liaison (3) prévue entre la première céramique en carbure de silicium (1) et la seconde céramique en carbure de silicium (2),
une première couche de revêtement (4) contenant plus de 50% en masse de silicium métallique et prévue sur une zone s'étendant de la surface de ladite couche de liaison (3) à au moins une surface de ladite première céramique en carbure de silicium (1) et de ladite seconde céramique en carbure de silicium (2),
et une seconde couche de revêtement (5) contenant l'un quelconque parmi Ni, Cu, Al ou Cr à plus de 50 % en masse et prévue sur la surface de ladite première couche de revêtement (4),
ladite couche de liaison (3) comprenant du carbure de silicium et du silicium métallique, où la teneur totale en carbure de silicium et en silicium métallique n'est pas inférieure à 85 % en masse parmi tous les composants de 100 % en masse constituant la couche de liaison (3).

2. Le corps de liaison en céramique (10) selon la revendication 1, dans lequel la seconde couche de revêtement (5) est prévue sur la surface de la première céramique en carbure de silicium (1) et de la seconde céramique en carbure de silicium (2).

3. Le corps de liaison en céramique (10) selon la revendication 1 ou 2, dans lequel un degré de dispersion des particules de carbure de silicium dans la couche de liaison (3) n'est pas inférieur à 0,3 ni supérieur à 0,9, le degré de dispersion étant déterminé selon la description.

4. Le corps de liaison en céramique (10) selon la revendication 1, dans lequel la première céramique en carbure de silicium (1) a un premier trou traversant (6), la seconde céramique en carbure de silicium (2) a un second trou traversant (7), et le premier trou traversant (6) et le second trou traversant (7) communiquent l'un avec l'autre, dans lequel la couche de liaison (3) est formée de telle manière qu'une première région (8) contenant du carbure de silicium à plus de 50 % en masse est prévue sur un côté circonférentiel interne et une seconde région (9) contenant du silicium métallique à plus de 50 % en masse est prévue sur un côté circonférentiel extérieur pour entourer la première région (8).

5. Le corps de liaison en céramique (10) selon la revendication 4, dans lequel le degré de dispersion des particules de carbure de silicium dans la première région (8) n'est pas inférieur à 0,3 ni supérieur à 0,9, le degré de dispersion étant déterminé selon la description.

6. Un échangeur de chaleur (12) comprenant un corps de passage d'écoulement constitué du corps de liaison en céramique (10) selon l'une quelconque des revendications 1 à 5.
